# EUROPÄISCHE PATENTSCHRIFT

(11) **EP 2 350 977 B1**
(45) Veröffentlichungstag und Bekanntmachung des Hinweises auf die Patenterteilung: **13.02.2013**
(21) Anmeldenummer: 10779696.3
(22) Anmeldetag: 06.11.2010
(51) Int. Cl.: G06T 15/20

(54) **VERFAHREN ZUR BILDFUSION VON ZUMINDEST ZWEI BILDERN ZU EINEM PANORAMABILD**
METHOD FOR COMBINING AT LEAST TWO IMAGES TO FORM A PANORAMIC IMAGE
PROCÉDÉ POUR FUSIONNER AU MOINS DEUX IMAGES POUR FORMER UNE IMAGE PANORAMIQUE

(30) Priorität: 21.11.2009 DE 102009054251
(43) Veröffentlichungstag der Anmeldung: 03.08.2011
(73) Patentinhaber: Diehl BGT Defence GmbH & Co. KG, 88662 Überlingen (DE)
(72) Erfinder: GAGEL, Florian, 88690 Uhldingen-Mühlhofen (DE)
(74) Vertreter: Diehl Patentabteilung
(86) Internationale Anmeldenummer: PCT/EP2010/006764
(87) Internationale Veröffentlichungsnummer: WO 2011/060885

(56) Entgegenhaltungen:
- US-B2- 7 010 158
- KANG S B ET AL: "3-D SCENE DATA RECOVERY USING OMNIDIRECTIONAL MULTIBASELINE STEREO", PROCEEDINGS OF THE 1996 IEEE COMPUTER SOCIETY CONFERENCE ON COMPUTER VISION AND PATTERN RECOGNITION. SAN FRANCISCO, JUNE 18 - 20, 1996; [PROCEEDINGS OF THE IEEE COMPUTER SOCIETY CONFERENCE ON COMPUTER VISION AND PATTERN RECOGNITION], LOS ALAMITOS, IE, 18. Juni 1996 (1996-06-18), Seiten 364-370, XP000640255, DOI: DOI:10.1109/CVPR.1996.517098 ISBN: 978-0-8186-7258-3

## Beschreibung

Die Erfindung betrifft ein Verfahren zur Bildfusion von zumindest zwei Bildern zu einem Panoramabild.

Bei Warn- und Auflclärungsgeräten, welche mehrere räumlich verteilte Kameras als Sensoren verwenden, um einem Bediener ein Panoramabild oder eine Rundumsicht der Lage zur Verfügung zu stellen, tritt das Problem der Parallaxenverschiebung auf: Ein physikalisches Objekt im Überlappungsbereich zweier räumlich separierter Kameras erscheint in diesen unter verschiedenen Winkeln. Der Effekt verschwindet im Fernfeld und wird umso größer, je näher das Objekt ist und je größer - im Fall von zwei Sensoren - die Stereobasis ist.

Eine einfache Lösung dieses Problems besteht in einer Nebeneinanderdarstellung separater Einzeldarstellungen, so dass eine unterbrochene Panoramadarstellung gebildet wird. Ein ununterbrochenes Panoramabild kann mit Hilfe komplexer Methoden der Bildverarbeitung gewonnen werden, bei denen auf zwei Bildern dargestellte Bildinhalte als gleiche Bildinhalte erkannt und zu einem Bild überlagert werden.

US- Patent Nr. 7,010,158 offenbart ein Verfahren zur Fusion von Entfernungsbildern welche mittels einer SRI- ("scannerless range imaging") Kamera gewonnen wurden. Die 3D-Bilder aus der SRI-Kamera werden zunächst global registriert und anschließend zu einem gemeinsamen 3D-Modell zusammengesetzt.

Es ist eine Aufgabe der vorliegenden Erfindung, ein Verfahren zur Bildfusion anzugeben, mit dem ein Panoramabild, das den Bildinhalt mehrerer Einzelbilder enthält, auf einfache Weise erzeugt werden kann.

Dieses Aufgabe wird durch ein Verfahren zur Bildfusion von zumindest zwei Bildern zu einem Panoramabild gelöst, bei dem erfingdungsgemäß Bildpunkten der Bilder jeweils eine Entfernung aus einem Entfernungsmodell zugeordnet wird, die Entfernung eine angenommene Entfernung von einem im Bildpunkt abgebildeten Objekt zu zumindest einem vorgegebenen Punkt ist, das Entfernungsmodell die Entfernung in Abhängigkeit von der Position der Bildpunkte im aufgenommenen Bild zuordnet und die Bildfusionierung unter Verwendung der zugeordneten Entfernungen durchgeführt wird.

Die Erfindung geht hierbei von folgender Überlegung aus: Um bei einer Panoramadarstellung eine realistische Darstellung zu erhalten, sollte die gesamte Darstellung so gebildet werden, wie sie ein Beobachter von einer einzigen Position aus sehen würde. Diese Position muss nicht mit der Position einer abbildenden Kamera übereinstimmen. Wenn mehrere Kameras die Einzelbilder von unterschiedlichen Aufnahmepositionen aufnehmen kann die Beobachterposition nicht mit der Position aller abbildenden Kameras übereinstimmen. Es sind daher die Darstellungen in den Einzelbildern von der Kamerasicht auf die Beobachtersicht umzurechnen.

Um aus den Einzelbildern eine realistische und kontinuierliche Panoramadarstellung und nicht nur eine Folge von Einzelbildern zu erzeugen, muss somit jedem dargestellten Objekt ein eindeutiger Winkel in Bezug auf die Beobachterposition zugeordnet werden. Dies ist mittels numerischer Berechnung möglich, sofern die Beobachterposition, die relative Lage der Kameras dazu und die Entfernung des abgebildeten Objekts zu den Kameras bekannt sind. Sind die Aufnahmepositionen bekannt, können die nötigen Winkel einfach bestimmt werden. Allerdings ist in der Regel die Entfernung eines abgebildeten Objekts zur abbildenden Kamera nicht bekannt.

Durch die Einführung eines Entfernungsmodells kann die an sich unbekannte Entfernung durch Modellannahmen ersetzt werden. Ist die Entfernung auf diese Weise quasi bekannt, kann im Überlappungsbereich zweier Bilder jedem Bildpunkt des einen Bilds ein Bildpunkt des anderen Bilds zugeordnet werden. Diese beiden so einander zugeordneten Bildpunkte können zu einem einzigen Bildpunkt der Panoramadarstellung verbunden werden. In dem Maße, wie das Entfernungsmodell mit der Realität übereinstimmt, können stereografische Störungen verringert und es kann ein kontinuierliches Panoramabild aus den Bildern erzeugt werden.

Das Entfernungsmodell sollte die abgebildete Realität so gut wie möglich wiedergeben. Je nach abgebildeter Topografie ist dies einfacher oder schwerer zu realisieren. Am einfachsten ist es, wenn die Topografie bekannt ist, da dann das Entfernungsmodell einfach gebildet werden kann, da zu jedem Bildpunkt bekannt sein kann, welchen topografischen Punkt es abbildet. Das Entfernungsmodell gibt so die Topografie der abgebildeten Umgebung wieder.

Sind die Kameras allerdings an einem bewegten Fahrzeug angebracht und ist die Umgebung nicht bekannt, so ist auch eine Zuordnung von Bildpunkt zu topografischem Punkt nicht bekannt. In diesem Fall ist der Weg über das Entfernungsmodell dennoch zielführend, wenn die Topografie in einem einfachen Modell in zufriedenstellendem Maße wiedergegeben werden kann. Dies kann z. B. auf See oder in einer ebenen Landschaft der Fall sein, da dort von einer zumindest im Wesentlichen ebenen Topografie ausgegangen werden kann. Anhand der bekannten Höhe der Kamera über dem Boden oder dem Wasser kann anhand des Elevationswinkels einer Blickrichtung oder eines Bildpunkts im Bild auf die Entfernung des im Bildpunkt abgebildeten Objekts geschlossen werden. Ist ein abgebildeter Gegenstand mit einer größeren Ausdehnung in Elevationsrichtung behaftet, wie es z. B. bei einem großen oder nahen Schiff der Fall ist, so ist zweckmäßigerweise eine Unterkante des Gegenstands zu bestimmen und die Entfernung des gesamten Gegenstands und damit aller Bildpunkte, die ihn abbilden auf diese Entfernung zu setzen, auch wenn ihr Elevationswinkel kleiner ist.

Die die Bilder aufnehmenden optischen Sensoren, im Folgenden der Einfachheit halber und ohne damit verbundene Einschränkung als Kameras bezeichnet, sind zueinander beabstandet. Sie nehmen die Umgebung in einer unterschiedlichen Perspektive auf. Mit Bezug zum Panoramabild sind die beiden Bilder daher nebeneinander angeordnet. Sie können teilweise überlappen Die Bilder können auf Bilddaten reduziert sein und müssen nicht sichtbar dargestellt sein. Im Folgenden werden daher auch Bilddaten, die ein Bild der Umgebung repräsentieren, als Bild bezeichnet. Das Panoramabild kann somit aus den Bilddaten bzw. zwei Bilddatensätzen zusammengesetzt sein, die jeweils für sich zu einem Bild zusammengesetzt werden könnten.

Das Panoramabild kann eine 360°-Rundumsicht sein, das insbesondere mit Bildern von mehr als zwei jeweils zueinander beabstandeten Kameras erzeugt wurde. Der vorgegebene Punkt ist zweckmäßigerweise die Beobachterposition, aus der das Panoramabild betrachtet erscheinen soll. Ein Bildpunkt kann ein Pixel eines digitalen Bildsensors einer Kamera sein, wobei auch eine gröbere und insbesondere eine feinere Unterteilung sinnvoll ist, da der Bildpunkt des einen Bilds zumeist nicht genau mit dem nach der Entfernungsinformation korrespondierenden Bildpunkt des anderen Bilds zusammenfällt. Die Entfernung ist vorteilhafterweise die Entfernung des im Bildpunkt abgebildeten Objekts zum vorgegebenen Punkt, insbesondere zur Position des fiktiven Beobachters, aus dessen Sicht das Panoramabild dargestellt sein soll.

In einer vorteilhaften Ausführungsform der Erfindung werden solche Bildpunkte der beiden Bilder zu einem Bildpunkt des Panoramabilds zusammengeführt, denen die gleiche Entfernung zugeordnet ist. Hierdurch können störende stereografische Effekte weitgehend vermieden werden.

Weiter ist es vorteilhaft, den Azimutwinkel der Bildpunkte als Information zum Zusammenführen zweiter Bildpunkte zu verwenden. Hierdurch kann ein horizontaler Überlappungsabstand der beiden Bilder für jeden Bildpunkt, und somit eine Zugehörigkeit zweier Bildpunkte zueinander, errechnet werden. Der Azimutwinkel ist zweckmäßigerweise bezogen auf eine zuvor festgelegte Richtung.

Aus den Bildpunkten der beiden Bilder können Voxel mit jeweils dreidimensionaler Rauminformation erzeugt werden. Die zweidimensionale Rauminformation, die jedem Bildpunkt aus seiner Lage im Bild und der bekannten Ausrichtung im abgebildeten Raum zugeordnet werden kann, kann hierbei um die Entfernungsinformation erweitert werden, so dass je ein Voxel mit dreidimensionaler Rauminformation zur Lage des jeweils abgebildeten Objekts im Raum relativ zu einem Bezugspunkt vorliegt. Werden nun diejenigen Voxel mit gleicher Rauminformation zu je einem Bildpunkt des Panoramabilds zusammengeführt, so kann durch eine solche Bildfusion ein Panoramabild mit geringen Bildfehlern erzeugt werden. Die Rauminformation enthält hierbei zweckmäßigerweise die Raumkoordinaten eines Blickpunkts bzw. eines vom Bildpunkt abgebildeten Objekts in einer Topografie aus Sicht vom vorgegebenen Punkt.

Eine gute Überwachung eines größeren Gegenstands, z. B. eines Schiffs, kann erreicht werden, wenn die zumindest zwei Bilder von verschiedenen Punkten aufgenommen werden. Außerdem ist es vorteilhaft, wenn sich die Bildbereiche der zumindest zwei Bilder teilweise überlappen.

Eine weitere vorteilhafte Ausgestaltung der Erfindung sieht vor, dass das Entfernungsmodell von einer bekannten Topografie der in den Bildern dargestellten Umgebung ausgeht. Hierdurch kann jedem Bildpunkt, der zweckmäßigerweise einen aufgenommenen Raumwinkelbereich abbildet, ein Punkt in der Topografie und damit eine Entfernung und insbesondere eine dreidimensionale Rauminformation zugeordnet werden. Das Entfernungsmodell ist besonders einfach und die Bildfusion damit zuverlässig, wenn das Entfernungsmodell von einem Blick auf eine ebene Oberfläche ausgeht. Das Entfernungsmodell geht somit vorteilhafterweise von der Annahme der Reduzierung der Lagemöglichkeit eines abgebildeten Objekts in eine zweidimensionale Topografie aus, deren Gestalt die Grundlage für das Entfernungsmodell bilden kann.

Die Entfernung kann trigonometrisch aus jeweils einem örtlichen Aufnahmepunkt der Bilder, dem vorgegebenen Punkt und der Position der Bildpunkte bestimmt werden. Bei bekannter oder als bekannt angenommener Topografie kann die Entfernung anhand der Position der Bildpunkte in den aufgenommenen Bildern und deren Blickpunkt in die Topografie unter Zugrundelegen der bekannten Ausrichtung der Bilder in dieser Topografie bestimmt wird.

Ist die Ausrichtung der Bilder in der Topografie nicht oder nicht genau genug bekannt, so kann eine Ausrichtung der Bilder in der Topografie anhand von Bildinformationen durch Bildverarbeitung ermittelt werden. So kann beispielsweise ein Horizont im Bild erkannt werden und damit eine Ausrichtung der Bilder hinsichtlich ihrer Elevation bestimmt werden. Das Erkennen des Horizonts ist ausreichend für eine Bildfusion, wenn die zwei oder mehr Kameras synchron bewegt werden, wie z. B. auf einem Schiff, so dass ihre Aufnahmerichtungen zueinander stets unverändert bleiben.

Zusätzlich oder alternativ kann eine Ausrichtung der Bilder in der Topografie anhand eines Lagesensors zur Bestimmung der Lage der die Bilder aufnehmenden Kameras ermittelt werden. Schnelle Änderungen in der Blickrichtung können hierdurch einfach erfasst werden.

Der vorgegebene Punkt kann die Position eines virtuellen Beobachters sein, aus der das Panoramabild betrachtet erscheint. Eine übersichtliche Überwachung kann erzielt werden, wenn der vorgegebene Punkt von einem Bediener verändert werden kann und das Panoramabild entsprechend des neuen Punkts aus den Bildern neu zusammengesetzt wird. Der Bediener kann so einen virtuellen Rundgang um einen Gegenstand, z. B. ein Schiff, machen und sich so einen realistischen Überblick über die Umgebung verschaffen. Dies kann geschehen, indem der vorgegebene Punkt um ein Objekt herumgeführt wird und das Panoramabild einem sich insbesondere kontinuierlich verändernden Sichtfeld eines sich um das Objekt herum bewegenden und z. B. nach radial außen schauenden virtuellen Beobachters entspricht.

Das Panoramabild kann eine andere, z. B. höhere Bildauflösung aufweisen als die beiden Bilder, um beispielsweise zwei sich nicht genau überlagernde Bildpunkte gut auflösen zu können. Weiter vorteilhaft ist es, wenn die zumindest zwei Bilder von zumindest zwei Kameras gleichzeitig aufgenommen werden.

Trotz der Bildfusion und der kontinuierlichen Darstellung der Umgebung im Panoramabild kann ein Bildfehler nicht vermieden werden, der dadurch auftritt, dass ein Gegenstand aus zwei unterschiedlichen Perspektiven aufgenommen wird. So wird z. B. ein in beiden Bildern abgebildetes Schiff einmal schräg von der Seite und einmal ganz von der Seite dargestellt. Die korrespondierenden Bildpunkte werden zwar so fusioniert, dass jeder Punkt des Gegenstands, z. B. ein Bullauge des abgebildeten Schiffes, im Panoramabild nur einmal abgebildet wird, doch der perspektivische Unterschied von z. B. in einem Bild sichtbaren und im anderen Bild unsichtbaren Kanten kann nicht eliminiert werden. Es kann daher sein, dass der abgebildete Gegenstand bzw. das dargestellte Objekt nicht scharf dargestellt oder nicht gut in seinen Details zu erkennen ist.

Diesem Nachteil kann entgegengewirkt werden, wenn das in einem Überlappungsbereich der beiden Bilder dargestellte Objekt im Panoramabild nur aus der Perspektive eines der Bilder dargestellt wird. Diese vereinfachte Darstellung erfolgt zweckmäßigerweise auf Kommando eines Bedieners, der die Kamera, deren Bildinhalt zur alleinigen Darstellung verwendet werden soll, aus den verwendeten Kameras auswählen kann.

Für diese Methode gibt es mehrere Optionen. Einfach ist es, wenn der ganze Überlappungsbereich nur mit der Darstellung aus einer Kamera dargestellt wird. Die Bildfusion wird somit zumindest für diesen Bereich gestoppt und eine klare Darstellung auf Kosten der Kontinuität der Panoramadarstellung erwirkt. Der Bediener kann sich somit Klarheit über einen interessierenden Gegenstand verschaffen. Eine Unterbrechung der Kontinuität der Panoramadarstellung kann vermieden werden, wenn der interessierende Gegenstand ohne seine Umgebung ausgewählt werden kann, z. B. mit einer Maus auf einem Bildschirm und einer unterstützenden Bildverarbeitung, und nur der Bildbereich dieses Gegenstands aus der Bildfusion herausgenommen wird.

Vorteilhafterweise kann der Bediener zwischen Bildfusion und - ganzer oder bereichsweiser - Unterbrechung der Bildfusion hin und her schalten, so dass er bei im Wesentlicher Aufrechterhaltung der Panoramaschau bei Bedarf einen Gegenstand genauer anschauen kann. Kann die Perspektive, aus der das Objekt im Panoramabild dargestellt wird, aus der Perspektive des einen in die Perspektive des anderen Bilds gewechselt werden, so kann der Bediener das Objekt bzw. den Gegenstand aus zwei Perspektiven anschauen und sich die geeignetere Perspektive auswählen.

Die Erfindung betrifft außerdem eine Vorrichtung zur Bildfusion mit zumindest zwei voneinander beabstandeten Kameras zur Aufnahme einer Umgebung aus verschiedenen Perspektiven, einer Bildanzeige zum Darstellen eines Panoramabilds und einem Prozessmittel, das dazu vorbereitet ist, ein Bild aus einer Kamera mit einem Bild der anderen Kamera zu einem Panoramabild zu fusionieren, wobei Bildpunkten der beiden Bilder jeweils eine Entfernung aus einem Entfernungsmodell zugeordnet wird, die Entfernung eine angenommene Entfernung von einem im Bildpunkt abgebildeten Objekt zu zumindest einem vorgegebenen Punkt ist, das Entfernungsmodell die Entfernung in Abhängigkeit von der Position der Bildpunkte im aufgenommenen Bild zuordnet und die Bildfusionierung unter Verwendung der zugeordneten Entfernungen durchgeführt wird.

Das Prozessmittel ist vorteilhafterweise dazu vorbereitet, die Durchführung eines beliebigen, mehrerer beliebiger oder aller der oben genannten Verfahrensschritte zu steuern. Eine solche Vorbereitung kann durch ein entsprechendes Steuerprogramm des Prozessmittels vorliegen, dessen Ablauf - beispielsweise in Verbindung mit geeigneten Eingangssignalen, wie Sensorsignalen - eine solche Steuerung bewirkt. Hierzu umfasst das Steuermittel zweckmäßigerweise elektronische Elemente, wie einen Prozessor und einen Datenspeicher, die zum Ablaufen des Steuerprogramms notwendig sind.

Aus dem Panoramabild können interessierende Objekt zuverlässig als solche erkannt werden, z. B. ein auf Kollisionskurs befindliches Boot. Vorteilhafterweise ist das Prozessmittel dazu vorbereitet, solche Objekte zu erkennen, eine geeignete Kamera auszuwählen und auf das Objekt zu richten.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: ein Schiff mit zehn Kameras, die eine Rundumsicht um das Schiff gewähren, in einer Draufsicht,
- Fig. 2: eine schematische Darstellung der Sichtbereiche von zwei Kameras und einem virtuellen Sichtbereich,
- Fig. 3: eine schematische Darstellung der Sichtbereiche aus FIG. 2 von der Seite,
- Fig. 4: eine schematische Darstellung eines Bilds einer Kamera und zweier darin dargestellter Objekte und
- Fig. 5: zwei Bilder aus zwei Kameras auf ein Boot und drei aus den beiden Bildern fusionierte Panorarnabilder.

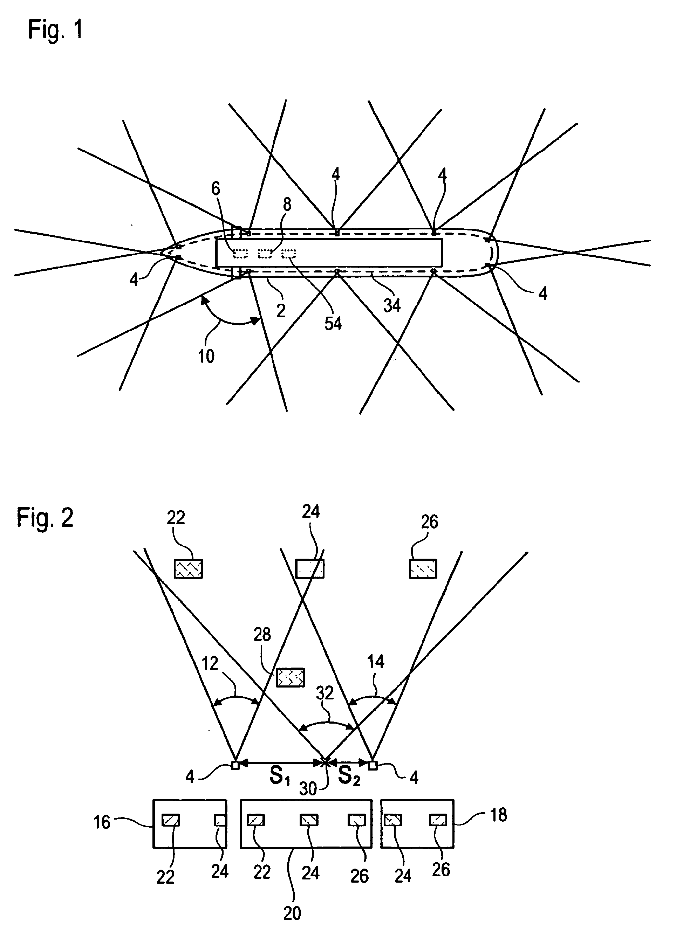

Figur 1 zeigt ein größeres Schiff 2 in einer schematischen Draufsicht, das mit zehn Kameras 4, einem Prozessmittel 6 und einer Bildanzeige 8 ausgerüstet ist. Jede der Kameras 4 hat einen Sichtbereich 10, wobei jeder Sichtbereich 10 mit beiden benachbarten Sichtbereichen 10 überlappt, so dass ab einem gewissen Abstand vom Schiff 2 eine Rundumsicht um das Schiff 2 ermöglicht wird. Anstelle des Schiffs 2 ist jedes andere Fahrzeug, Gebäude oder Objekt möglich.

In Figur 2 sind zwei Sichtbereiche 12, 14 von zwei der zehn Kameras 4 aus Figur 1 dargestellt. Für die übrigen Kameras 4 aus Figur 1 gilt das Folgende gleichermaßen. Aus Daten der beiden Kameras 4 wird mit Hilfe des Prozessmittels 6 jeweils ein Bild 16, 18 erstellt und zu einem Panoramabild 20 fusioniert. Die Bilder 16, 18 an sich werden nicht dargestellt und beschränken sich auf Bilddaten aus den beiden Kameras 4. Das Panoramabild 20 wird auf der Bildanzeige 8 sichtbar gemacht, so dass ein Bediener die Umgebung des Schiffs 2 anhand des Panoramabilds 20 überwachen kann.

Neben dem Schiff 2 befinden sich vier Objekte 22, 24, 26, 28. Das Objekt 22 wird vollständig im Bild 16 abgebildet, das Objekt 24 nur teilweise. Die Objekte 24 und 26 werden im Bild 18 abgebildet und das Objekt 28 wird nicht abgebildet und ist somit für den Bediener nicht sichtbar.

Das Panoramabild 20 zeigt die Umgebung mit den Objekten 22, 24, 26 so, wie sie sich einem Beobachter, der sich in einem vorgegebenen Punkt 30 befindet, zeigen würde. Der Beobachter hat ebenfalls einen Sichtbereich 32, der sich über die Sichtbereiche 12, 14 beider Kameras 4 erstreckt. Verallgemeinert auf alle zehn Kameras 4 aus Figur 1 würde sich der Sichtbereich 32 des Panoramabilds 20 rundum über 360° um das Schiff 2 erstrecken können. Der Punkt 30 ist mit den bekannten Strecken S₁ und S₂ von den beiden Kameras 4 beabstandet. Den Punkt 30 und damit die Strecken S₁ und S₂ können von einem Bediener an der Bildanzeige 8 in vorgegebenen Grenzen eingestellt werden. So kann der Punkt 30 beispielsweise virtuell auf einer Bahn 34 rund um das Schiff bzw. um Schiffsaufbauten bewegt werden. Dies kann anhand eines Einstellmittels geschehen, z. B. eines Schiebers entlang einer mechanischen Bahn oder einer Maus auf einem Bildschirm. Je nach eingestellter Position wird das Panoramabild 20 vom Prozessmittel 6 errechnet und auf der Bildanzeige 8 dargestellt.

Zur Fusionierung der beiden Bilder 16, 18 zum Panoramabild 20 wird ein Entfernungsmodell verwendet, das jedem Bildpunkt eines jeden Bilds 16, 18 einen definierte Punkt im Ortsraum zuordnet. Die Koordinaten des Ortsraums können auf einen festen Punkt des Schiffs 2 bezogen sein und mit Hilfe einer Koordinatentransformation auf die Koordinaten des vom Bediener vorgegebenen Punkts 30 weitergerechnet werden. Das Entfernungsmodell geht von der Annahme der Reduzierung der Lagemöglichkeit eines abgebildeten Objekts 22, 24, 26 in eine zweidimensionale Landschaft bzw. Topografie aus, deren Gestalt die Grundlage für das Entfernungsmodell bildet. Es kann so jedem Bildpunkt eines jeden Bilds 16, 18 ein Ort oder Blickpunkt in der Landschaft zugeordnet werden. Ohne das Entfernungsmodell wäre jedem Bildpunkt eine Blicklinie zugeordnet. Durch die vorgegebene Topografie des Entfernungsmodells wird die mögliche Lage des abgebildeten Objekts 22, 24, 26 auf den Schnittpunkt der Blicklinie mit der Topografie und damit auf einen eindeutigen Punkt reduziert, der mit konkreten dreidimensionalen Koordinaten versehen werden kann. Jedes Pixel eines Bilds 16, 18 wird somit zu einem in seinen dreidimensionalen Koordinaten festgelegten Voxel.

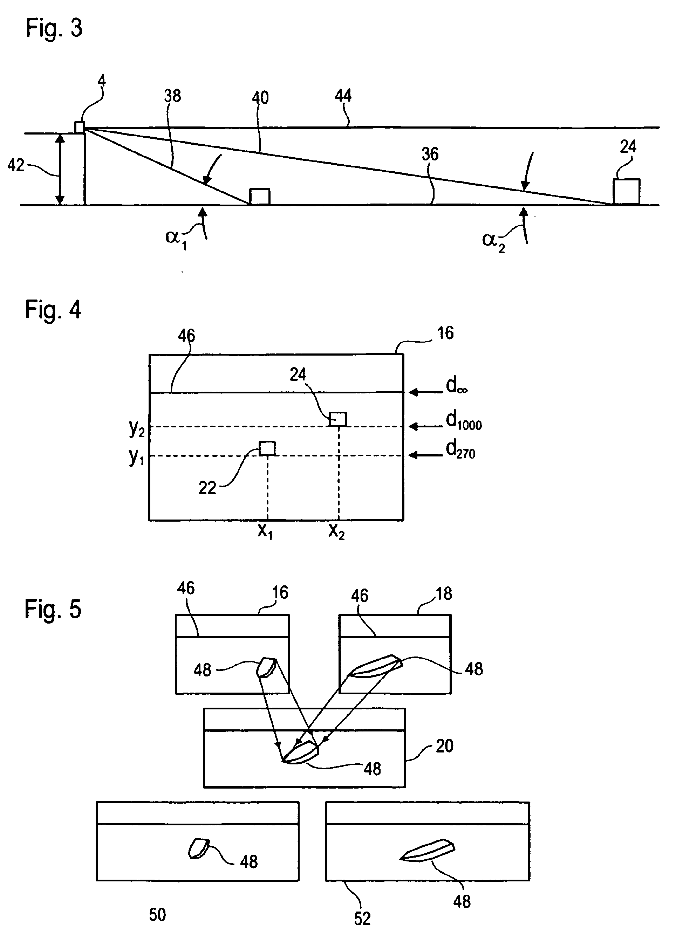

Dieses Modell wird im Folgenden anhand der Figuren 3 und 4 erläutert. Eine Kamera 4 auf dem Schiff 2 schaut auf eine ebene Fläche 36, z. B. das Meer. Auf dieser Fläche 36 sind zwei Objekte 22, 24. Der Blick zu den Objekten 22, 24 legt jeweils eine Blicklinie 38, 40 fest, deren Elevationswinkel α₁ und α₂ und Azimutwinkel (in Figur 2 zwar nicht eingezeichnet aber sichtbar) die Lage des abgebildeten Objekts 22, 24 im Bild 16 festlegt. Durch die Elevationswinkel α₁ und α₂ und Azimutwinkel ist jede Blickrichtung 38, 40 eindeutig bestimmt.

Figur 4 zeigt in einer schematisierten Darstellung die Objekte 22, 24 wie sie im Bild 16 sichtbar wären, wenn dieses auf der Bildanzeige 8 dargestellt würde. Jedem Objekt 22, 24 sind Bildkoordinaten x₁, y₁ und x₂, y₂ zugeordnet, aus denen die Blicklinie zu den Objekten 22, 24 bestimmt werden kann.

Das Entfernungsmodell fügt zu diesen Daten die Topografie hinzu, oder eine Annahme einer Topografie, im Beispiel aus Figur 3 die ebene Fläche 36, die in der Realität als Meer oder Landschaftsebene von der exakten ebenen Fläche abweichen kann. Mit Hilfe der bekannten Lage der Kamera 4 zur Topografie, im Beispiel aus Figur 3 der bekannten Höhe 42 über der Ebene 36, kann jeder Blicklinie 38, 40 ein Schnittpunkt mit der Topografie zugeordnet werden, der in seinen Ortskoordinaten eindeutig bestimmt ist. Der Schnittpunkt der horizontalen Blicklinie 44 mit der Topografie liegt im Unendlichen. Im Bild wird der Horizont als unendlich fern angenommen, so dass bei sichtbarem Horizont mittels Bildverarbeitung ein Korrektiv für die horizontale Blicklinie 44 vorhanden ist.

Anhand der als bekannt angenommenen Topografie und dem Entfernungsmodell wird dem Objekt 22 die Entfernung d₂₇₀ = 270 m und dem Objekt 24 die Entfernung d₁₀₀₀ = 1000 m zur aufnehmenden Kamera 4 zugeordnet. Durch den Elevationswinkel α₁ und α₂ kann z. B. bei ebener Topografie die Entfernung d durch den Zusammenhang d = h / sin α bestimmt werden, wobei h die Höhe 42 ist. Dem im Bild 16 sichtbaren Horizont 46 wird die Entfernung d_{∞} = unendlich zugeordnet. Hierdurch und durch den Azimutwinkel ist die Ortslage der Objekte 22, 24 relativ zur aufnehmenden Kamera 4 bekannt.

Mit Hilfe der bekannten Relativposition des vom Bediener festgelegten Punkts 30 zur aufnehmenden Kamera 4 kann durch einfache Koordinatentransformation die Relativposition der Objekte 22, 24 zum Punkt 30 ermittelt werden und durch einfache Trigonometrie deren Lage im Panoramabild 20.

Im Überlappungsbereich von zwei Bildern 16, 18 sind jedem Umgebungspunkt zwei Bildpunkte zugewiesen, nämlich ein Bildpunkt im einen Bild 16 und ein weiterer Bildpunkt im anderen Bild 18. Diese beiden korrespondierenden Bildpunkte haben bezogen auf den Punkt 30 die gleichen Ortskoordinaten. Sie werden daher im Panoramabild 20 übereinander abgebildet. Dies kann durch gewichtete Grauwertmittelung geschehen, so dass ein hellerer Bildpunkt und ein dunklerer Bildpunkt einen mittelhellen Bildpunkt ergeben. Anstelle der Abbildung der beiden korrespondierenden Bildpunkte in einem Bildpunkt des Panoramabilds 20 kann dieses feiner aufgelöst sein, so dass auf eine nicht vollständige Überlappung der beiden korrespondierenden Bildpunkte Rücksicht genommen werden kann. Es ist auch möglich anstelle des gesamten Panoramabilds nur Teile daraus zur Anzeige zu bringen.

Anhand Figur 5 wird im Folgenden erläutert, wie ein aus dieser Bildfusion entstehendes Problem gelöst werden kann. Die beiden Bilder 16, 18 zeigen ein Boot 48, oder irgendein anderes Objekt, in zwei unterschiedlichen perspektivischen Darstellungen. Die resultierende Panoramadarstellung 20 zeigt das Boot 48 aus der Perspektive des Punkts 30, der, wie in Figur 2 dargestellt, zwischen den beiden Kameras 4 liegt, die die beiden Bilder 16, 18 zweckmäßigerweise gleichzeitig aufnehmen.

Je nach Perspektive kann es sein, dass ein Objekt 22, 24, 26, wie das Boot 48, im einen Bild von einer Seite und im anderen Bild von der anderen Seite aufgenommen wird. Die Bildfusion ordnet zwar jeden Punkt des Überlappungsbereichs der Bilder korrekt in das Panoramabild, wie durch die Pfeile in Figur 5 angedeutet ist, dennoch würde ein Blick vom Punkt 30 auf das Boot 48 dieses entweder von der einen Seite oder von der anderen zeigen. Auf die Darstellung der nicht sichtbaren Seite müsste daher bei der Fusion verzichtet werden, was aufwendige Bildverarbeitung voraussetzt. Ohne diese kann es sein, dass ein Objekt 22, 24, 26 im Panoramabild 20 schwer erkennbar dargestellt ist.

Besteht die Option, dass der Bediener den Überlappungsbereich oder nur den Bereich um das Boot 48 entweder aus der Perspektive der einen oder der anderen Kamera 4 anschauen kann, so wie in den Panoramabildern 50 und 52 dargestellt ist, kann eine scharfe Abbildung des Boots in das Panoramabild 20 übernommen werden. Die Kontinuität des Panoramabilds 20 ist zwar dann an dieser Stelle unterbrochen, doch zum Zweck einer Detaildarstellung kann dies in Kauf genommen werden. Hierzu ist das Datenverarbeitungsprogramm, mit dem das Prozessmittel 6 das Panoramabild 20 erstellt, mit einer Funktion ausgestattet, die der Bediener anwählen kann und die das Boot 48 oder einen vom Bediener ausgewählten Bereich aus einer aufgenommenen Sicht darstellt, zweckmäßigerweise so, dass der Bediener von einer Sicht auf die andere Sicht umschalten kann. Ist das Detail ausreichen betrachtet, kann vom Detailmodus wieder auf den Panoramamodus gewechselt werden.

Grundlage für die Verwendung des Entfernungsmodells ist es, dass die Ausrichtung der Kameras 4 in die Topografie bzw. der Bilder in der Topografie bekannt ist. Bei einem schwankenden Schiff kann diese Grundlage durch die Schiffsbewegungen entzogen werden. Es kann jedoch die Ausrichtung der die Bilder 16, 18 aufnehmenden Kameras 4 anhand eines Lagesensors 54 (Figur 1) ermittelt werden, der die Bewegungen des Schiffs 2 und damit der der Kameras 4 registriert und die entsprechenden Daten an das Prozessmittel 6 weitergibt. Dieses berechnet anhand der Sensordaten die Ausrichtung der Kameras 4 relativ zur Topografie und damit die Koordinaten der Bildpunkte in der Topografie.

Um eine Fehler erzeugende Drift bei der Ausrichtungsbestimmung zu vermeiden, kann die Ausrichtung der Kameras 4 zusätzlich oder alternativ anhand von Bildinformationen durch Bildverarbeitung ermittelt werden. Wird ein Objekt abgebildet und erkannt, dessen Position im Raum bekannt ist, wie z. B. der Horizont 46, so kann die Ausrichtung der Kamera 4 anhand der Bilddaten dieses Objekts bestimmt werden.

Ein zusätzlicher Vorteil beim Verwenden von Bildverarbeitung zusätzlich zur Verwendung des Entfernungsmodells besteht darin, dass ausgedehnte Objekte als solche erkannt werden können. So überdeckt z. B. das Boot 48 einen Elevationswinkelbereich, der bei alleiniger Anwendung des Entfernungsmodells dazu führen würde, dass der obere Teil des Boots als weiter weg angenommen wird, als der untere Teil. Wird das Objekt als solches erkannt, kann die Entfernung aus einem unteren Bildpunkt des Objekts oder seiner Unterkante bestimmt werden, wobei sämtlichen Bildpunkten des Objekts darüber z. B. die gleiche Entfernung zugeordnet werden kann.

Bei einem Schwanken des Schiffs 2 kann es sinnvoll sein, die Schiffsbewegung in die Darstellung der Umgebung einzubeziehen, so dass auch der Bildbereich des Panoramabilds 20 entsprechend der Schiffsbewegung schwankt. Auf diese Weise kann ein Widerspruch zwischen Augen- und Gleichgewichtsinformation im Gehirn des Beobachters bzw. Bedieners verringert und Übelkeit entgegengewirkt werden. Zweckmäßigerweise kann zwischen einer stabilisierten virtuellen Darstellung und einer die Schiffbewegung mitvollziehenden virtuellen Darstellung gewählt und umgeschaltet werden.

Durch die Schritte der Bildfusion können Objekte 22, 24, 26 in ihrer Lage zu einer Kamera 4 bzw. zum Schiff 2 gut erkannt werden. Ist ein Objekt 22, 24, 26 von besonderem Interesse, z. B. weil es sich auf Kollisionskurs zum Schiff 2 befindet, so können die Ortskoordinaten des Objekts 22, 24, 26 dafür verwendet werden, eine oder mehrere Kameras 4 mit Hilfe der Daten der Bildfusion zu steuern und auf das Objekt 22, 24, 26 auszurichten, so dass eine Bediener das Objekt 22, 24, 26 ohne in einem Bereich des Panoramabilds 20 abgebildet wird, der ohne Bildüberschneidung ist. Auf diese Weise kann ein interessierendes Objekt 22, 24, 26 scharf und fehlerfrei abgebildet werden und so genau beobachtet werden. Hierzu erkennt das Prozessmittel 6 die Ortskoordinaten der in einem Überlappungsbereich abgebildeten Objekte 24 und steuert die Kameras so, dass sie aus dem Überlappungsbereich herausgeführt werden.

### Bezugszeichenliste

- 2: Schiff
- 4: Kamera
- 6: Prozessmittel
- 8: Bildanzeige
- 10: Sichtbereich
- 12: Sichtbereich
- 14: Sichtbereich
- 16: Bild
- 18: Bild
- 20: Panoramabild
- 22: Objekt
- 24: Objekt
- 26: Objekt
- 28: Objekt
- 30: Punkt
- 32: Sichtbereich
- 34: Bahn
- 36: Fläche
- 38: Blicklinie
- 40: Blicklinie
- 42: Höhe
- 44: Blicklinie
- 46: Horizont
- 48: Boot
- 50: Panoramabild
- 52: Panoramabild
- 54: Lagesensor

## Patentansprüche

1. Verfahren zur Bildfusion von zumindest zwei Bildern (16, 18) zu einem Panoramabild (20, 50, 52), bei dem Bildpunkten der Bilder (16, 18) jeweils eine Entfernung aus einem Entfernungsmodell zugeordnet wird, die Entfernung eine angenommene Entfernung von einem im Bildpunkt abgebildeten Objekt (22, 24, 26) zu zumindest einem vorgegebenen Punkt (30) ist, das Entfernungsmodell die Entfernung in Abhängigkeit von der Position der Bildpunkte im aufgenommenen Bild (16, 18) zuordnet und die Bildfusionierung unter Verwendung der zugeordneten Entfernungen durchgeführt wird.

2. Verfahren nach Anspruch 1,
**dadurch gekennzeichnet,**
**dass** solche Bildpunkte der beiden Bilder (16, 18) zu einem Bildpunkt des Panoramabilds (20, 50, 52) zusammengeführt werden, denen die gleiche Entfernung zugeordnet ist.

3. Verfahren nach Anspruch 1 oder 2,
**dadurch gekennzeichnet,**
**dass** der Azimutwinkel der Bildpunkte als Information zum Zusammenführen zweier Bildpunkte verwendet wird.

4. Verfahren nach einem der vorhergehenden Ansprüche,
**dadurch gekennzeichnet,**
**dass** aus den Bildpunkten der beiden Bilder (16, 18) Voxel mit jeweils dreidimensionaler Rauminformation erzeugt werden und Voxel mit gleicher Rauminformation zu einem Bildpunkt des Panoramabilds (20, 50, 52) zusammengeführt werden.

5. Verfahren nach Anspruch 4,
**dadurch gekennzeichnet,**
**dass** die Rauminformation die Raumkoordinaten eines Blickpunkts in einer Topografie aus Sicht vom vorgegebenen Punkt (30) enthält.

6. Verfahren nach einem der vorhergehenden Ansprüche,
**dadurch gekennzeichnet,**
**dass** die zumindest zwei Bilder (16, 18) von verschiedenen Punkten aufgenommen werden.

7. Verfahren nach einem der vorhergehenden Ansprüche,
**dadurch gekennzeichnet,**
**dass** das Entfernungsmodell von einer bekannten Topografie der in den Bildern (16, 18) dargestellten Umgebung ausgeht.

8. Verfahren nach einem der vorhergehenden Ansprüche,
**dadurch gekennzeichnet,**
**dass** das Entfernungsmodell von der Annahme der Reduzierung der Lagemöglichkeit eines abgebildeten Objekts (22, 24, 26) in eine zweidimensionale Topografie ausgeht, deren Gestalt die Grundlage für das Entfernungsmodell bildet.

9. Verfahren nach einem der vorhergehenden Ansprüche,
**dadurch gekennzeichnet,**
**dass** die Entfernung anhand der Position der Bildpunkte in den aufgenommenen Bildern (16, 18) und deren Blickpunkt in eine bekannten Topografie unter Zugrundelegen der bekannten Ausrichtung der Bilder (16, 18) in dieser Topografie bestimmt wird.

10. Verfahren nach einem der vorhergehenden Ansprüche,
**dadurch gekennzeichnet,**
**dass** der vorgegebene Punkt (30) die Position eines virtuellen Beobachters ist, aus der das Panoramabild (20, 50, 52) betrachtet erscheint.

11. Verfahren nach einem der vorhergehenden Ansprüche,
**dadurch gekennzeichnet,**
**dass** der vorgegebene Punkt von einem Bediener verändert wird und das Panoramabild (20, 50, 52) entsprechend des neuen Punkts aus den Bildern (16, 18) neu zusammengesetzt wird.

12. Verfahren nach Anspruch 11,
**dadurch gekennzeichnet,**
**dass** der vorgegebene Punkt (30) um ein Objekt herumgeführt wird und das Panoramabild (20, 50, 52) einem sich verändernden Sichtfeld eines sich um das Objekt herum bewegenden virtuellen Beobachters entspricht.

13. Verfahren nach einem der vorhergehenden Ansprüche,
**dadurch gekennzeichnet,**
**dass** die zumindest zwei Bilder (16, 18) von zumindest zwei Kameras (4) gleichzeitig aufgenommen werden.

14. Verfahren nach einem der vorhergehenden Ansprüche,
**dadurch gekennzeichnet,**
**dass** ein in einem Überlappungsbereich der beiden Bilder (16, 18) dargestelltes Objekt (24) im Panoramabild (50, 52) nur aus der Perspektive eines der Bilder (16, 18) dargestellt wird.

15. Vorrichtung zur Bildfusion mit zumindest zwei voneinander beabstandeten Kameras (4) zur Aufnahme einer Umgebung aus verschiedenen Perspektiven, einer Bildanzeige (8) zum Darstellen eines Panoramabilds (20, 50, 52) und einem Prozessmittel (6), das dazu vorbereitet ist, ein Bild (16, 18) aus einer Kamera (4) mit einem Bild (18, 16) der anderen Kamera (4) zu einem Panoramabild (20, 50, 52) zu fusionieren, wobei Bildpunkten der beiden Bilder (16, 18) jeweils eine Entfernung aus einem Entfernungsmodell zugeordnet wird, die Entfernung eine angenommene Entfernung von einem im Bildpunkt abgebildeten Objekt (22, 24, 26) zu zumindest einem vorgegebenen Punkt (30) ist, das Entfernungsmodell die Entfernung in Abhängigkeit von der Position der Bildpunkte im aufgenommenen Bild (16, 18) zuordnet und die Bildfusionierung unter Verwendung der zugeordneten Entfernungen durchgeführt wird.

## Claims

1. Method for image fusion of at least two images (16, 18) to form a panoramic image (20, 50, 52), in which pixels in the images (16, 18) are each associated with a distance from a distance model, the distance is an assumed distance from an object (22, 24, 26), which is imaged at that pixel, to at least one predetermined point (30), the distance model associates the distance as a function of the position of the pixels in the recorded image (16, 18), and the image fusion is carried out using the associated distances.

2. Method according to Claim 1,
**characterized**
**in that** the pixels in the two images (16, 18) which are combined to form one pixel in the panoramic image (20, 50, 52) are those which are associated with the same distance.

3. Method according to Claim 1 or 2,
**characterized**
**in that** the azimuth angle of the pixels is used as information for combination of two pixels.

4. Method according to one of the preceding claims,
**characterized**
**in that** voxels, each having three-dimensional spatial information, are produced from the pixels in the two images (16, 18), and voxels having the same spatial information are combined to form one pixel in the panoramic image (20, 50, 52).

5. Method according to Claim 4,
**characterized**
**in that** the spatial information contains the spatial coordinates of a viewing point in a topography from the view from the predetermined point (30).

6. Method according to one of the preceding claims,
**characterized**
**in that** the at least two images (16, 18) are recorded from different points.

7. Method according to one of the preceding claims,
**characterized**
**in that** the distance model originates from a known topography of the surrounding area represented in the images (16, 18).

8. Method according to one of the preceding claims,
**characterized**
**in that** the distance model originates from the assumption of the reduction in the capability of an imaged object (22, 24, 26) to be positioned in a two-dimensional topography whose shape forms the basis of the distance model.

9. Method according to one of the preceding claims,
**characterized**
**in that** the distance is determined on the basis of the position of the pixels in the recorded images (16, 18) and their viewing point into a known topography on the basis of the known alignment of the images (16, 18) in this topography.

10. Method according to one of the preceding claims,
**characterized**
**in that** the predetermined point (30) is the position of a virtual observer from which the panoramic image (20, 50, 52) appears to be viewed.

11. Method according to one of the preceding claims,
**characterized**
**in that** the predetermined point is changed by an operator, and the panoramic image (20, 50, 52) is recomposed from the images (16, 18), corresponding to the new point.

12. Method according to Claim 11,
**characterized**
**in that** the predetermined point (30) is moved around an object, and the panoramic image (20, 50, 52) corresponds to a changing field of view of a virtual observer who is moving around the object.

13. Method according to one of the preceding claims,
**characterized**
**in that** the at least two images (16, 18) are recorded at the same time by at least two cameras (4).

14. Method according to one of the preceding claims,
**characterized**
**in that** an object (24), which is represented in an overlap area of the two images (16, 18) in the panoramic image (50, 52) is represented only from the perspective of one of the images (16, 18).

15. Apparatus for image fusion having at least two cameras (4), which are at a distance from one another, for recording a surrounding area from different perspectives, an image display (8) for displaying a panoramic image (20, 50, 52), and a process means (6) which is designed to fuse an image (16, 18) from a camera (4) with an image (18, 16) from the other camera (4) to form a panoramic image (20, 50, 52), with pixels in the two images (16, 18) each being associated with a distance from a distance model, with the distance being an assumed distance from an object (22, 24, 26), which is imaged at that pixel, to at least one predetermined point (30), with the distance model associating the distance as a function of the position of the pixels in the recorded image (16, 18), and with the image fusion being carried out using the associated distances.

## Revendications

1. Procédé pour fusionner au moins deux images (16, 18) pour former une image panoramique (20, 50, 52), dans lequel chacun des points d'image des images (16, 18) se voit affecter une distance à partir d'un modèle de distances, la distance étant une distance supposée depuis un objet (22, 24, 26) représenté dans le point d'image jusqu'à au moins un point prédéfini (30), le modèle de distances affectant la distance en fonction de la position des points d'image dans l'image prise (16, 18) et la fusion des images étant effectuée par l'utilisation des distances affectées.

2. Procédé selon la revendication 1,
**caractérisé en ce que** de tels points d'image des deux images (16, 18) auxquels sont affectés la même distance, sont réunis en un point d'image de l'image panoramique (20, 50, 52).

3. Procédé selon la revendication 1 ou 2,
**caractérisé en ce que** l'angle azimutal des points d'image est utilisé comme information pour la réunion de deux points d'image.

4. Procédé selon une des revendications précédentes,
**caractérisé en ce qu'**à partir des points d'image des deux images (16, 18), on génère des voxels comportant chacun des informations spatiales à trois dimensions et les voxels comportant les mêmes informations spatiales sont réunis en un point d'image de l'image panoramique (20, 50, 52).

5. Procédé selon la revendication 4,
**caractérisé en ce que** l'information spatiale contient les coordonnées spatiales d'un point de vue dans une topographie vue à partir du point prédéfini (30).

6. Procédé selon une des revendications précédentes,
**caractérisé en ce que** les deux images (16, 18) au moins sont prises à partir de points différents.

7. Procédé selon une des revendications précédentes,
**caractérisé en ce que** le modèle de distances part du principe d'une topographie connue de l'environnement représenté dans les images (16, 18).

8. Procédé selon une des revendications précédentes,
**caractérisé en ce que** le modèle de distances part du principe de la réduction de la possibilité de position d'un objet (22, 24, 26) représenté dans une topographie bidimensionnelle, dont la forme constitue la base du modèle de distances.

9. Procédé selon une des revendications précédentes,
**caractérisé en ce que** la distance est définie en se fondant sur la position des points d'image dans les images (16, 18) prises et de leur point de vue dans une topographie connue basée sur l'orientation connue des images (16, 18) dans cette topographie.

10. Procédé selon une des revendications précédentes,
**caractérisé en ce que** le point prédéfini (30) est la position d'un observateur virtuel à partir de laquelle l'image panoramique (20, 50, 52) apparaît observée.

11. Procédé selon une des revendications précédentes,
**caractérisé en ce que** le point prédéfini est modifié par un opérateur et que l'image panoramique (20, 50, 52) est à nouveau réunie à partir des images (16, 18) en fonction du nouveau point.

12. Procédé selon la revendication 11,
**caractérisé en ce que** le point prédéfini (30) est déplacé autour d'un objet et l'image panoramique (20, 50, 52) correspond à champ de vision mouvant d'un observateur virtuel se déplaçant autour de l'objet.

13. Procédé selon une des revendications précédentes,
**caractérisé en ce que** les deux images (16, 18) au moins sont enregistrées simultanément par au moins deux caméras (4).

14. Procédé selon une des revendications précédentes,
**caractérisé en ce qu'**un objet (24) représenté dans une zone de recouvrement des deux images (16, 18) n'est représenté dans l'image panoramique (50, 52) qu'à partir de la perspective d'une des deux images (16, 18).

15. Dispositif pour fusionner des images avec au moins deux caméras (4) distantes l'une de l'autre pour la prise de vue d'un environnement à partir de différentes perspectives, un affichage d'image (8) pour la représentation d'une image panoramique (20, 50, 52) et un moyen de traitement (6) prévu pour fusionner une image (16, 18) d'une caméra (4) avec une image (18, 16) de l'autre caméra (4) pour former une image panoramique (20, 50, 52), chacun des points d'image des deux images (16, 18) se voyant affecter une distance à partir d'un modèle de distances, la distance étant une distance supposée depuis un objet (22, 24, 26) représenté dans le point d'image jusqu'à au moins un point prédéfini (30), le modèle de distances affectant la distance en fonction de la position des points d'image dans l'image prise (16, 18) et la fusion des images étant effectuée par l'utilisation des distances affectées.
